# EUROPEAN PATENT SPECIFICATION

(11) **EP 2 222 128 B1**
(45) Date of publication and mention of the grant of the patent: **18.06.2014**
(21) Application number: 08757535.3
(22) Date of filing: 28.05.2008
(51) Int. Cl.: H04W 72/12, H04W 48/08

(54) **METHOD FOR SENDING, TRANSMITTING AND SCHEDULING SYSTEM MESSAGE IN LONG TERM EVOLUTION SYSTEM**
VERFAHREN ZUM SENDEN, ÜBERTRAGEN UND SCHEDULING EINER SYSTEMNACHRICHT IN EINEM LANGZEIT-EVOLUTIONS-SYSTEM
PROCÉDÉ POUR ENVOYER, TRANSMETTRE ET PLANIFIER UN MESSAGE SYSTÈME DANS UN SYSTÈME D'ÉVOLUTION À LONG TERME

(30) Priority: 12.12.2007 WO PCT/CN2007/003568
(43) Date of publication of application: 25.08.2010
(73) Proprietor: ZTE Corporation, Shenzhen, Guangdong 518057 (CN)
(72) Inventor: DU, Zhongda, Shenzhen Guangdong 518057 (CN)
(74) Representative: Le Noane, Karine
(86) International application number: PCT/CN2008/071124
(87) International publication number: WO 2009/076803

(56) References cited:
- CN-A- 1 505 416
- CN-A- 1 567 769
- CN-A- 1 992 691
- Anon: "3GPP TS 36331 v1.0.0: Technical Specification Group Radio Access Network; Evolved Universal Terrestrial Radio Access (E-UTRA) Radio Resource Control (RRC); Protocol Specification (Release 8)", 3rd Genertion Partnership Project , 1 November 2007 (2007-11-01), pages 1-58, XP002670538, Retrieved from the Internet: URL:http://www.3gpp.org/ftp/Specs/archive/ 36_series/36.331/36331-100.zip [retrieved on 2012-02-29]
- NOKIA: "Release 4, Performance requirements for a BCH reception", 3GPP DRAFT RAN WG4; R4-000900, 3RD GENERATION PARTNERSHIP PROJECT (3GPP), 20 November 2000 (2000-11-20), XP050168030, Sophia Antipolis, France
- ERICSSON ET AL: "MIB Information Elements", 3GPP DRAFT RAN WG2; R2-075511, 3RD GENERATION PARTNERSHIP PROJECT (3GPP), 7 December 2007 (2007-12-07), XP050142060, Vienna, Austria
- TSG RAN WG1: "Response to RAN2 LS on SFN Reading from the Target Cell at HO (R2-074590)", 3GPP DRAFT RAN WG1; R1-075108, 3RD GENERATION PARTNERSHIP PROJECT (3GPP), 21 November 2007 (2007-11-21), XP050108534, Korea
- NOKIA ET AL: "E-UTRA handover and cell reselection execution considerations", 3GPP DRAFT RAN WG4; R4-070922, 3RD GENERATION PARTNERSHIP PROJECT (3GPP), 22 June 2007 (2007-06-22), XP050177396, Orlando, USA
- QUALCOMM EUROPE: "Inclusion of RACH parameters in SU-1", 3GPP DRAFT RAN WG2; R2-072589, 3RD GENERATION PARTNERSHIP PROJECT (3GPP), 22 June 2007 (2007-06-22), XP050135400, Orlando, USA
- MOTOROLA: "BCH Scheduling", 3GPP DRAFT RAN WG2; R2-071481, 3RD GENERATION PARTNERSHIP PROJECT (3GPP), 22 March 2007 (2007-03-22), XP050134416, St. Julian
- LG ELECTRONICS: "Need to obtain the target SFN prior to HO", 3GPP DRAFT RAN WG2; R2-074312 NEED FOR READING THE TARGET SFN PRIOR TO HO, 3RD GENERATION PARTNERSHIP PROJECT (3GPP), 1 October 2007 (2007-10-01), XP050136901, Shanghai, China

## Description

### TECHNICAL FIELD

The present invention relates to the field of wireless communications, and particularly to a method for sending, transmitting and scheduling a system message in the LTE (Long Term Evolution) system of 3GPP (the 3rd Generation Partnership Project).

### BACKGROUND

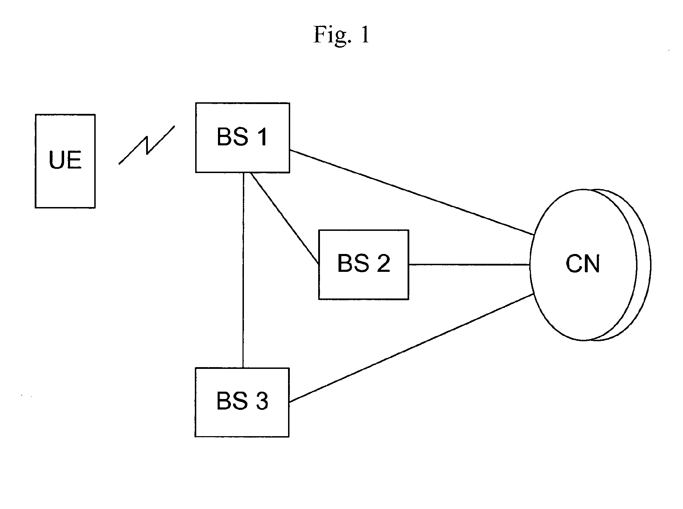

As shown in Fig. 1, the LTE system is mainly composed of user equipments, base stations and core networks. A network composed of base stations is referred to as a Radio Access Network (RAN), which is responsible for the transactions of the access layer, e.g. the management of wireless resources. There may be a physical or logical connection between the base stations (e.g. between the base station 1 and the base station 2, or between the base station 1 and the base station 3 as shown in Fig. 1) depending on an actual situation. Each base station may be connected with one or more Core Network (CN) nodes. The core network is responsible for the transactions of the non-access layer, e.g. location updating and the like, and serves as a anchor point of a user plane. The user equipment refers to various devices that can communicate with cellular wireless communication networks, e.g. a mobile phone or a laptop computer, etc.

The basic component of the system time in the LTE system is the length of a radio frame, which is 10 ms. A radio frame includes 10 sub-frames, where each sub-frame corresponds to 1 ms.

As disclosed by the document 3GPP TS 36.331 v1.0.0 (« Technical Specification Group Radio Access Network; Evolved Universal Terrestrial Radio Access (E-UTRA) Radio Resource Control (RRC) ; Protocol Specification (Release 8) », 3rd Génération Partnership Project »),

the system message is a message for broadcasting system configuration parameters. In the LTE, if being divided according to function, the system message mainly includes a Master system Information Block (MIB), a Scheduling Information Unit 1 (SU-1) and other Scheduling Information Units (SU-X). Each SU-X may include one or more System Information Blocks (SIBs), i.e. the SIB mapped to the same SU-X has the same scheduling rule as each other in time domain. The MIB includes parts of physical layer parameters, a system frame number (SFN), and the scheduling information of the SU-1. The SU-1 includes the scheduling information of other SU-X, a Public Land Mobile Network List (PLMN LIST), a cell identifier, an access control parameter, etc. The SU-X includes other contents required to be broadcasted, including configuring information of common channels and cell reselecting information, etc.

The MIB is broadcasted over a system broadcast channel (e.g. PBCH), where the time-domain and frequency-domain resource allocation is static in PBCH. The repeat cycle of the MIB is fixed, i.e. the contents thereof are repeated one time per 40 ms. In order to increase the coverage of the MIB, the network may send the same MIB contents in each radio frame at each 40 ms. The herein-mentioned radio frame number where the MIB is located refers to the radio frame number where the MIB is sent for the first time in the repeat cycle of the MIB. The MIB is always sent in the No. 0 sub-frame of the radio frame where the MIB is located.

The SU-1 and the SU-X are carried over a downlink shared channel. The scheduling cycle of the SU-1 is also fixed, i.e. the SU-1 is scheduled once per 80 ms. The SU-1 may be resent many times within its scheduling cycle. The herein-mentioned radio frame number where the SU-1 is located refers to the radio frame number where the SU-1 is sent for the first time in the scheduling cycle of the SU-1. The SU-1 occupies one sub-frame, and the location of the sub-frame is also fixed in the radio frame where the SU-1 is located.

The system information block broadcasted in a sub-frame is carried over the wireless resource of the system. The control parameters, e.g. a Modulating and Coding Scheme (MCS) parameter, a transmission format, and the like, which are related to these wireless resources, are provided through a dedicated control channel (e.g. PDCCH) associated therewith, i.e. a dynamic scheduling method is used.

The sequence that the UE (User Equipment) reads the system message is as follows: firstly, reading the MIB to obtain the scheduling information of the SU-1, and then reading the contents of the SU-1 subsequently. The user equipment can obtain the scheduling information of other SU-X from the SU-1, thereby reading the contents of these system information blocks subsequently.

In order to allow the user equipment to read the SU-1 as soon as possible after reading the MIB, the radio frame carrying the SU-1 and the radio frame carrying the MIB are in the same time-domain location. However, because the scheduling cycle of the SU-1 is twice of the repeat cycle of the MIB, during the time period when the radio frame carries the MIB, the SU-1 is carried in some time, and is not carried in other time. In the MIB, the scheduling information of the SU-1 is actually a one-bit label, which is used for indicating whether the SU-1 is carried during the time period when the radio frame carries the MIB.

In order to ensure the coverage of the MIB, the contents in the MIB should be as few as possible. Adding one bit means that it is required to increase the rate of the PBCH by 25 bits per second.

XP2670538 (3GPP; Pub. 00-11-2007) relates to scheduling of system information, and discusses the following contents: both the MIB and SU-I use a fixed schedule with a periodicity of 40 and 80 ms respectively. SU-I is scheduled in subframe #5 (frame structure Type 1) or in sub-frame #0 of the second half frame (frame structure Type 2).

XP50168030 (Nokia; Pub. 00-11-2000) relates to contents of system information in the UMTS system and discusses the following contents: the positions of the MIB and SIBs on the BCH is determined by the repetition period and the position within a period. For the MIB the repetition period is 8 frames (80 ms) while for SIBs it may vary from 4 to 4096 frames (40 ms to over 40 seconds). The positions and the repetition periods of all SIBs are scheduled by the network. SIBs are segmented if they are too large to fit into one transport block.

None of the above reference documents discusses fixing SFNs in which the MIB and SU-1 are transmitted and how to reduce bits to be transmitted in the MIB.

### SUMMARY

The technical problem to be solved by the present invention is to overcome the drawbacks of the prior art and to provide a method for sending, transmitting and scheduling a system message in an LTE system, so as to achieve the object of sending, transmitting and scheduling the SU-1 without needing to refer to scheduling information of the SU-1 in the MIB.

The present invention provides a method, according to claim 1, for scheduling a system message in a long term evolution system.

Additionally, the repeat cycle of the MIB is 40 ms, and a scheduling cycle of the SU-1 is 80 ms; and
the SU-1 is sent repeatedly in the scheduling cycle of the SU-1; and the SFN-S1 is the system frame number of the radio frame in which the SU-1 is sent for the first time in one scheduling cycle.

The present invention further provides a method, according to claim 3, for sending a system message in a long term evolution system.

The present invention further provides a method, according to claim 4, for transceiving a system message in a long term evolution system.

According to the technical solutions of the present invention, by fixing the relative scheduling relationship between the SU-1 and the MIB, the scheduling information bit related to the SU-1 can be omitted in the MIB, thus under the same sending condition, the coverage of the MIB can be increased and the reliability that the user equipment receives the MIB can be improved.

### BRIEF DESCRIPTION OF THE DRAWINGS

Fig. 1 is a schematic diagram illustrating a configuration of an LTE system in the prior art;
Fig. 2 is a flowchart illustrating specific implementation of a method for transmitting a system message in an LTE system according to the present invention; and
Fig. 3 is a schematic diagram illustrating a configuration of the system message in an application example of the present invention.

### DETAILED DESCRIPTION

The core idea of the present invention is that: the scheduling rule of the SU-1 relative to the MIB is fixed, i.e. the SU-1 is carried in the fixed radio frame, where the radio frame carrying the SU-1 overlaps in time domain with the radio frame in which the MIB is sent for the first time in the repeat cycle of the MIB; and when receiving the system message, the user equipment receives the MIB and the SU-1 over the fixed radio frame, thus the bit for indicating the scheduling information of the SU-1 in the MIB can be omitted.

The present invention will be described in detail with reference to the accompanying drawings and the embodiments as follows.

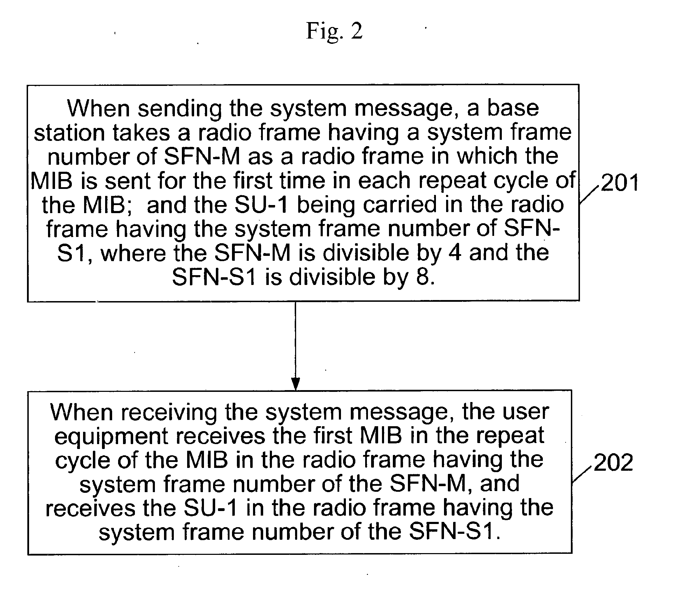

Fig. 2 is a flowchart illustrating a method for transmitting a system message in an LTE system. As shown in Fig. 2, the method includes steps as follows:
201: when the system message is sent by the base station, the SU-1 sent for the first time in a scheduling cycle is carried in a fixed radio frame, where the radio frame carrying the SU-1 overlaps in time domain with the radio frame in which the MIB is sent for the first time in the repeat cycle of the MIB.

Specifically, when the base station sends the system message, the radio frame having the system frame number of SFN-M is taken as a radio frame in which the MIB is sent for the first time in the repeat cycle of the MIB, and the SU-1 sent for the first time in a scheduling cycle is carried in the radio frame having the system frame number of SFN-S1, i.e. the SFN-S1 is the system frame number of the radio frame in which the SU-1 is sent for the first time in a scheduling cycle;
wherein, the SFN-M is divisible by 4 and the SFN-S1 is divisible by 8.

As a preferred embodiment: the repeat cycle of the MIB is 40 ms and the scheduling cycle of the SU-1 is 80 ms; the base station broadcasts the MIB over the PBCH, where the MIB is carried in the No. 0 sub-frame of the radio frame; the SU-1 and the SU-X is carried over the downlink shared channel; the SU-1 is carried in the fixed sub-frame of the radio frame; and the scheduling information of the SU-X is carried in the SU-1.

This step is also the method for sending the system message in the LTE system.

202: the user equipment receives the system message, where the MIB and the SU-1 are received over the fixed radio frame.

Specifically, the user equipment receives the MIB sent for the first time in the repeat cycle of the MIB over the radio frame having the system frame number of the SFN-M, and may subsequently receive the MIB sent repeatedly in the repeat cycle of the MIB over the succeeding radio frame; and the user equipment receives the SU-1 sent for the first time in the scheduling cycle of the SU-1, over the radio frame having the system frame number of the SFN-S1; and
the user equipment may obtain the scheduling information of other SU-X from the SU-1, thus to receive the system information block contained in the SU-X.

With the above-mentioned method, there is no need to employ a bit to indicate whether the SU-1 is carried during the time period when the radio frame carries the MIB, thus under the same sending condition, the coverage of the MIB can be increased.

A method for scheduling a system message in an LTE system includes:
the SU-1 sent for the first time in a scheduling cycle being carried in the fixed radio frame, where the radio frame carrying the SU-1 overlaps in time domain with the radio frame in which the MIB is sent for the first time in the repeat cycle of the MIB; and
specifically, the radio frame having the system frame number of SFN-M is taken as a radio frame in which the MIB is sent for the first time in the repeat cycle of the MIB, and the SU-1 sent for the first time in a scheduling cycle is carried in the radio frame having the system frame number of SFN-S1; the SFN-M is divisible by 4 and the SFN-S1 is divisible by 8.

As a preferred embodiment: the repeat cycle of the MIB is 40 ms and the scheduling cycle of the SU-1 is 80 ms; the MIB is broadcasted over the PBCH, and is located in the No. 0 sub-frame of each radio frame; the SU-1 and the SU-X are carried over the downlink shared channel; and the SU-1 is located in the fixed sub-frame of the radio frame, and the scheduling information of the SU-X is carried in the SU-1.

Hereinbelow, the present invention is described in further detail by way of an application example.

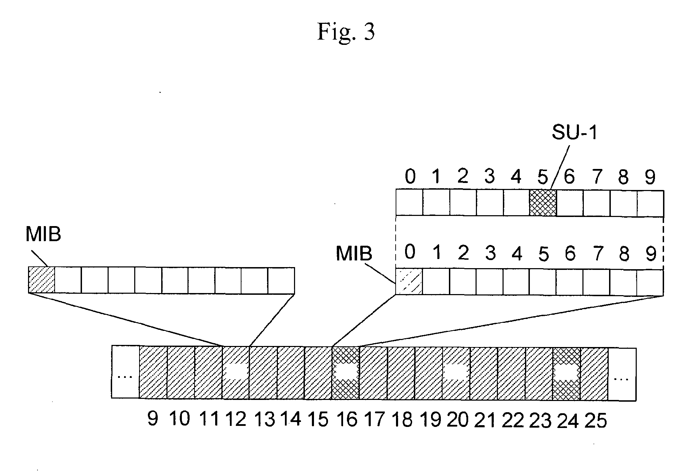

As shown in Fig. 3, in the system message sent by the base station, the radio frame having the system frame number of the SFN-M is taken as a radio frame in which the MIB is sent for the first time in the repeat cycle of the MIB, and the MIB is carried in the No. 0 sub-frame of the radio frame; wherein the SFN-M is divisible by 4. That is, the radio frames having the system frame number of ..., 12, 16, 20, 24, ... are the radio frames in which the MIBs are sent for the first time in the repeat cycle of the MIBs. The repeat cycle of the MIB is 40 ms.

The scheduling cycle of the SU-1 is 80 ms. The SU-1 sent for the first time in a scheduling cycle is carried in the No. 5 sub-frame of the radio frame having the system frame number of the SFN-S1; The SFN-S1 is divisible by 8. That is, the base station has the SU-1 carried in the No. 5 sub-frame of the radio frame having the system frame number of ..., 16, 24, ...

Taking the radio frame having the system frame number of 16 as an example, that radio frame is the radio frame in which the MIB is sent for the first time in this repeat cycle of the MIB, wherein the MIB is carried in the No. 0 sub-frame of the PBCH and the SU-1 is carried in the No. 5 sub-frame of the downlink shared channel.

The user equipment may receive the MIB and the SU-1 just following such rule, and then obtains the scheduling information of other SU-X from the SU-1, thus subsequently receives the system information block contained in the SU-X; therefore, it is unnecessary to carry the scheduling information of the SU-1 in the MIB.

Certainly, other various embodiments may also be available for the present invention, and those skilled in the art are capable of devising various modifications and variations according to the present invention without departing from the present invention. However, such corresponding modifications and variations should all be included within the protection scope of the appended claims of the present invention.

### INDUSTRIAL APPLICABILITY

According to the technical solutions of the present invention, by fixing the relative scheduling relationship between the SU-1 and the MIB, the scheduling information bit related to the SU-1 can be omitted in the MIB, thus under the same sending condition, the coverage of the MIB can be increased and the reliability that the user equipment receives the MIB can be improved.

## Claims

1. A method for scheduling a system message in a long term evolution system, comprising:
sending, for the first time, a master system information block MIB in a radio frame having a system frame number SFN-M, repeating the sending of the MIB for one or more times during a repeat cycle of the MIB, and sending a scheduling information unit SU-1 in a radio frame having a system frame number SFN-S1;
**characterized in that**, SFN-M mod 4 = 0, SFN-S1 mod 8 = 0, and the scheduling information of the SU-1 is excluded from the MIB.

2. The method according to claim 1, wherein,
the repeat cycle of the MIB is 40 ms, and a scheduling cycle of the SU-1 is 80 ms;
and
the SU-1 is sent repeatedly in the scheduling cycle of the SU-1,wherein the SFN-S1 is the system frame number of the radio frame in which the SU-1 is initially sent in one scheduling cycle.

3. The method according to either of claim 1 or 2,
comprising:
scheduling, by a base station, the system message
and then sending, by the base station, the system message (201).

4. The method according to claim 3,
comprising:
sending the system message in the long term evolution system (201); and
receiving, by a user equipment, the system message, including receiving the MIB in the radio frame having the system frame number SFN-M, and receiving the SU-1 in the radio frame having the system frame number SFN-S1 (202).

## Patentansprüche

1. Verfahren zur Ablaufplanung einer Systemmeldung in einem Langzeitentwicklungssystem, umfassend:
zum ersten Mal Sendung eines Master-Systeminformationsblocks MIB in einem Funkrahmen mit einer Systemrahmennummer SFN-M, Wiederholung der Sendung des MIB ein oder mehrere Male während eines Wiederholungszyklus des MIB, und Sendung einer Planungsinformationseinheit SU-1 in einem Funkrahmen mit einer Systemrahmennummer SFN-S1;
**dadurch gekennzeichnet, dass** SFN-M mod 4 = 0, SFN-S1 mod 8 = 0, und die Planungsinformation von SU-1 vom MIB ausgeschlossen ist.

2. Verfahren nach Anspruch 1, wobei
der Wiederholungszyklus vom MIB gleich 40 ms ist, und ein Planungszyklus von SU-1 gleich 80 ms ist; und
SU-1 wiederholt im Planungszyklus von SU-1 gesendet wird, wobei SFN-S1 die Systemrahmennummer des Funkrahmens ist, in dem SU-1 anfänglich in einem Planungszyklus gesendet wird.

3. Verfahren nach einem der Ansprüche 1 oder 2, umfassend
Ablaufplanung, durch eine Basisstation, der Systemmeldung und dann Sendung, durch die Basisstation, der Systemmeldung (201).

4. Verfahren nach Anspruch 3, umfassend:
Sendung der Systemmeldung im Langzeitentwicklungssystem (201); und
Empfang, durch eine Benutzerausrüstung, der Systemmeldung, darin eingeschlossen Empfang des MIB im Funkrahmen mit der Systemrahmennummer SFN-M, und Empfang von SU-1 im Funkrahmen mit der Systemrahmennummer SFN-S1 (202).

## Revendications

1. Procédé d'ordonnancement d'un message système dans un système d'évolution à long terme, comprenant :
l'envoi, pour la première fois, d'un bloc d'informations système MIB dans une trame radio ayant un numéro de trame système SFN-M, la répétition de l'envoi du MIB une ou plusieurs fois pendant un cycle de répétition du MIB, et l'envoi d'une unité d'informations de planification SU-1 dans une trame radio ayant un numéro de trame système SFN-S1 ;
**caractérisé en ce que** SFN-M mod 4 = 0, SFN-S1 mod 8 = 0, et les informations d'ordonnancement de la SU-1 sont exclues du MIB.

2. Procédé selon la revendication 1, dans lequel le cycle de répétition du MIB est de 40 ms, et un cycle d'ordonnancement de la SU-1 est de 80 ms ; et
la SU-1 est envoyée de façon répétée dans le cycle d'ordonnancement de la SU-1, dans lequel le SFN-S1 est le numéro de trame système de la trame radio dans laquelle la SU-1 est initialement envoyée dans un cycle d'ordonnancement.

3. Procédé selon l'une ou l'autre des revendications 1 ou 2, comprenant :
l'ordonnancement, par une station de base, du message système, puis l'envoi, par la station de base, du message système (201).

4. Procédé selon la revendication 3, comprenant :
l'envoi du message système dans le système d'évolution à long terme (201) ; et
la réception, par un équipement utilisateur, du message système, comprenant la réception du MIB dans la trame radio ayant le numéro de trame système SFN-M, et la réception de la SU-1 dans la trame radio ayant le numéro de trame système SFN-S1 (202).
